# EUROPEAN PATENT APPLICATION

(11) **EP 3 677 110 A1**
(43) Date of publication of application: **08.07.2020**
(21) Application number: 19020003.0
(22) Date of filing: 02.01.2019
(51) Int. Cl.: A01D 45/06

(54) **HEMP HARVESTING MACHINE**

(71) Applicant: Pinkowski, Tomasz, 62-100 Wagrowiec (PL)
(72) Inventor: Pinkowski, Tomasz, 62-100 Wagrowiec (PL)

(57) **Abstract**

The hemp gathering machine works on the rear three-point suspension of a tractor and consists of:
1) one part that collects the flowers (panicles) of the hemp and puts them onto a trailer,
2) another part that collects the stems and places them on the field.

Its versatility consists in that it is possible to collect only panicles of hemp plants or only stems (which are laid in such a manner that retting takes place already in the field). The machine can harvest hemp in one or many stages.

A hemp harvesting machine, in its part for collecting hemp flowers (panicles), consists of the scooping reels (9) that have height and angle of inclination adjustable by way of mechanical and hydraulic adjustment of the cutting bar (2), from the machine's own system or an external system (of the farm tractor) and the height of the entire machine is adjustable.

A hemp harvesting machine, in its part for collecting hemp stems, consists of the springs (19) that press the stems against the conveyor (18) and then eject them to the side perpendicularly to the driving direction, which facilitates the retting process

## Description

The hemp gathering machine works on the rear three-point suspension of a tractor. It was developed due to renewed global interest in harvesting of hemp. However, the lack of appropriately automated harvesting process has resulted in decisions not to grow the plant. The benefits of cultivation of hemp is the broad range of its applications, from the medical sector to the airspace industry, automotive industry, construction industry, etc.

The machine can harvest hemp in one or many stages. Its versatility consists in that it is possible to collect only panicles of hemp plants or only stems (which are laid in such a manner that retting takes place already in the field).

The device consists of one part that collects the flowers (panicles) of the hemp and puts them onto a trailer, and another part that collects the stems and places them on the field.

### DEVICE FOR COLLECTING PANICLES:

1) The device for collecting panicles (mostly of hemp) has a fingerless cutting bar **(2)** with possible adjustment of the working position, mounted on a frame **(1)** using a rear three-point suspension of a farm tractor **(11).** The device has a belt conveyor for transporting panicles onto a trailer that moves parallel to the machine for collection of panicles, as well as an oblique screen. The device has a frame **(1)** consisting of six rectangular box sections which are installed on the rear three-point suspension of a farm tractor **(11).** In the front part of the frame **(1),** on the lower front (longer) side, there is a fingerless cutting bar **(2).** The bar is driven by a hydraulic motor **(3)** through a drive shaft **(4)** and on the other side a feedback shaft **(5)** is installed. The conveyor has intermediate support rolls. There are removing fingers **(6)** mounted to the transverse thresholds of the conveyor. The cutting bar **(2)** is driven by a hydraulic motor **(8)** through a planetary gear **(7).** Behind the cutting bar (scythe) **(2),** above the transverse conveyor, there is a scooping reel **(9)** driven by a hydraulic motor **(10)** located on the frame of the transverse conveyor. The height and angle of inclination of the reel is adjustable. The machine has adjustable panicle cutting height, thanks to mechanical and hydraulic adjustment of the finger bar from the machine's system and from an external system (of the farm tractor), as well as thanks to adjustable height of the entire machine.
2) A device characterized by that the belt conveyor has transverse ribs with installed removing fingers.
3) A device characterized in that it has adjustable scooping wheels.

### DEVICE FOR COLLECTING STEMS:

Components fully suitable for installation for one-phase collection of hemp using a loader installed on the tractor using a Euro bracket carrier frame. The height of the cut can be adjusted using a telescope tower **(21)** using a hydraulic actuator **(22).** The device for cutting industrial hemp has a fingerless cutting bar **(12)** installed on a frame **(13)** made of rectangular box sections. In the front part of the machine there is a planetary gear **(15)** that drives a cutting bar **(12)** through a hydraulic motor **(14).** Above the cutting bar there are guiding beaks **(16).** At the end of the beaks there are scooping-sliding stars **(17)** that throw the material (hemp stems) onto a transverse conveyor with lifters **(18).** The springs located in the back **(19)** press the stems to the conveyor; the stems are then ejected to the side perpendicularly to the driving direction, which facilitates the retting process, which takes place in the field. The machine can be supported by transport wheels **(20).**

The machine can also be installed on a front loader (TUR type) using a Euro bracket carrier frame.

The machine can be equipped with a device for fragmenting hemp panicles and stems.

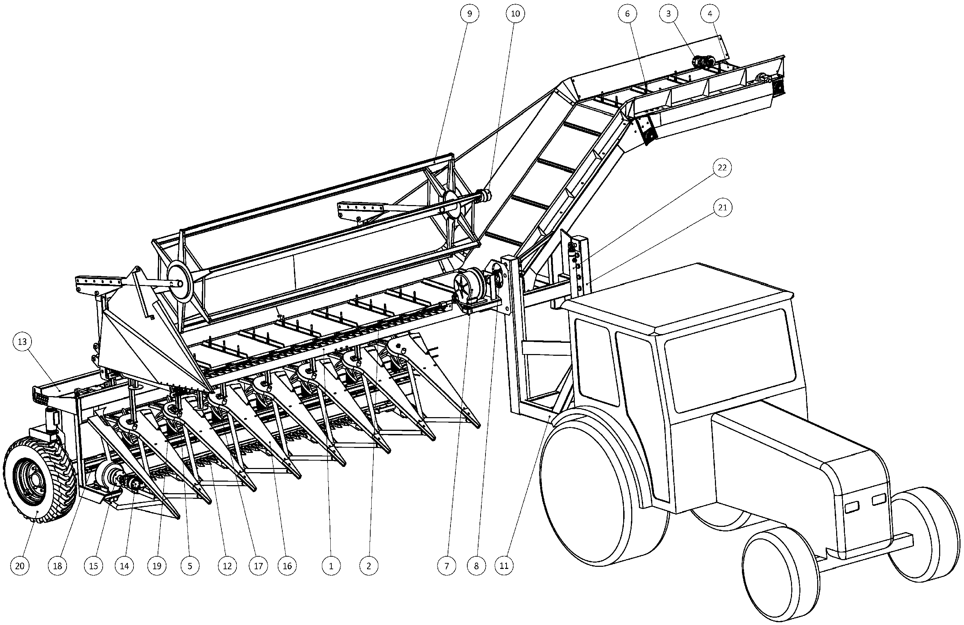

## Claims

1. A hemp harvesting machine, which consists of one part that collects hemp flowers (panicles) and puts them onto a trailer, and another part that collects the stems and places them on the field.

2. A hemp harvesting machine, according to claim 1 above, where the part for collection of hemp flowers (panicles) consists of the following elements:
- a frame (1)
- a cutting bar (2)
- a hydraulic motor (3)
- a drive shaft (4)
- a feedback shaft (5)
- a carrier with removing fingers (6)
- a planetary gear (7)
- a hydraulic motor (8)
- a scooping reel (9)
- a second hydraulic motor (10)
- an oblique screen

3. A hemp harvesting machine, in its part for collecting hemp flowers (panicles), according to claim 2 above, where the scooping reels (9) have height and angle of inclination adjustable by way of mechanical and hydraulic adjustment of the cutting bar (2), from the machine's own system or an external system (of the farm tractor) and the height of the entire machine is adjustable.

4. A hemp harvesting machine, in its part for collecting hemp flowers (panicles), according to claim 2 above, where the conveyor with collecting fingers (6) has transverse ribs and supporting intermediate rollers.

5. A hemp harvesting machine, in its part for collecting hemp flowers (panicles), according to claim 2 above, where the cutting bar (2) is fingerless, with possibility to adjust the working position and to install on the lower front (longer) side of the frame (1), using a rear three-point suspension of a farm tractor (11).

6. A hemp harvesting machine, inn its part for collecting hemp flowers (panicles), according to claim 2 above, where the frame (1) consists of six rectangular box sections for installation on the rear three-point suspension of a farm tractor (11).

7. A hemp harvesting machine, according to claim 1 above, where the part for collection of hemp stems consists of the following elements:
- a fingerless cutting bar (12)
- a frame (13)
- a planetary gear (15)
- a hydraulic motor (14)
- guide beaks (16)
- scooping-sliding stars (17)
- a transverse conveyor with lifters (18)
- springs (19)
- transport wheels (20)
- a telescope tower (21)
- a hydraulic actuator (14)

8. A hemp harvesting machine, in its part for collecting hemp stems, according to claim 7 above, where the frame (13) consists of rectangular box sections.

9. A hemp harvesting machine, in its part for collecting hemp stems, according to claim 7 above, where the springs (19) press the stems against the conveyor (18) and then eject them to the side perpendicularly to the driving direction, which facilitates the retting process.

10. A hemp harvesting machine, in its part for collecting hemp stems, according to claim 7 above, where the telescope tower (21) and the hydraulic actuator (22) are used to adjust the cutting height.

11. A hemp harvesting machine, in its part for collecting hemp stems, according to claim 7 above, which can be installed on a tractor or on a front loader (of the TUR type) using a Euro bracket carrier frame.

12. A hemp harvesting machine, in its part for collecting hemp stems, according to claim 7 above, which can be equipped with a device for fragmenting hemp panicles and stems.
